# EUROPÄISCHE PATENTSCHRIFT

(11) **EP 1 535 957 B1**
(45) Veröffentlichungstag und Bekanntmachung des Hinweises auf die Patenterteilung: **10.05.2006**
(21) Anmeldenummer: 04015297.7
(22) Anmeldetag: 30.06.2004
(51) Int. Cl.: C08J 9/32, C08L 27/18, C08K 7/16

(54) **Thermoisolierplatte**
Thermoinsulating plate
Plaque thermoisolante

(30) Priorität: 25.11.2003 DE 20318330 U
(43) Veröffentlichungstag der Anmeldung: 01.06.2005
(73) Patentinhaber: BRANDENBURGER ISOLIERTECHNIK GMBH & Co., 76829 Landau/pfalz (DE)
(72) Erfinder: Hüls, Adrian, Dipl.-Ing., 76131 Karlsruhe (DE)
(74) Vertreter: Kesselhut, Wolf

(56) Entgegenhaltungen:
- EP-A- 0 304 699
- US-A- 5 348 990

## Beschreibung

Die Erfindung betrifft eine Thermoisolierplatte zur Außenisolierung von Werkzeugen auf Basis von Füllstoffe enthaltenden thermostabilen Kunststoffen, gemäß dem Oberbegriff von Anspruch 1.

Temperierte Presswerkzeuge aller Art verbrauchen ohne Außenisolierung unnötig viel Energie und erfordern lange Aufheiz- und Taktzeiten; außerdem ist es schwer, eine gleichmäßige Wärmeverteilung im Werkzeug zu gewährleisten. Bisher wurden als Thermoisolierplatten zur Außenisolierung von Werkzeugen zum Beispiel solche auf Basis von glasfaserverstärkten Polyester- oder Phenolharzen oder von verpresstem und gesintertem Polytetrafluorethylen(PTFE)- und Siliziumdioxid- Pulver verwendet. Polyesterharze sind jedoch chemisch nicht sehr beständig, daraus hergestellte Thermoisolierplatten leiden bei der Reinigung in basischen Ultraschallbädern. Thermoisolierplatten aus PTFE- und Siliziumdioxid- Pulver sind zwar chemisch beständig, sie weisen aber eine relativ hohe Wärmeleitzahl von etwa 0,29 W/mK auf.

Der Erfindung liegt daher die Aufgabe zugrunde, eine chemisch beständige Thermoisolierplatte mit niedriger Wärmeleitzahl, geringer Dichte und guter mechanischer Bearbeitbarkeit zur Außenisolierung von Werkzeugen bereitzustellen.

Diese Aufgabe wird erfindungsgemäß gelöst durch eine Thermoisolierplatte mit einer Dicke von 3 bis 15 mm auf Basis von PTFE mit einem Gehalt von 5 bis 70 Gew% Hohlkugeln mit einem Durchmesser von 0,1 bis 300 µm.

In der EP-A 304 699 sind Verbundwerkstoffe mit niedriger Dielektrizitätskonstante aus PTFE und 50 bis 95 Gew% Mikrohohlglaskugeln beschrieben. Sie werden hergestellt durch Vermischen von PTFE- Pulver mit den Hohlkugeln und einem Schmiermittel, Auswalzen, Extrudieren zu einer Folie, Entfernen des Schmiermittels, Erhitzen und Versintern, wobei das PTFE eine faserige Struktur annimmt. Im Beispiel ist eine 0,15 mm dicke Folie beschrieben. Die Folien können als Elektroisoliermaterial, z.b. für Kabelisolierung oder für gedruckte Schaltungen verwendet werden.

Der zur Anwendung kommende Kunststoff ist PTFE ("Teflon"), vorzugsweise mit einer mittleren Korngröße von 10 bis 80 µm.

Die Hohlkugeln können aus chemisch beständigem Glas, aus Keramik oder aus hochtemperaturbeständigen thermoplastischen Kunststoffen bestehen. Ihr mittlerer Durchmesser kann in weiten Grenzen zwischen 0,1 und 300 µm liegen, vorzugsweise zwischen 1 und 200 µm und insbesondere zwischen 10 und 150 µm. Sie sind in Mengen von 5 bis 70, vorzugsweise von 10 bis weniger als 50 Gew%, und insbesondere in Mengen von 12 bis 40 Gew% in den Thermoisolierplatten enthalten. Bei Mengen weit oberhalb von 50 Gew% leidet die Schlagfestigkeit der Platten. Die Hohlkugeln weisen vorzugsweise eine Druckfestigkeit von 2 bis 40 MPa auf. Bevorzugt sind Hohlglaskugeln aus Glas mit hoher chemischer Beständigkeit.

Zur Herstellung der erfindungsgemäßen Thermoisolierplatten wird PTFE- Pulver mit den Hohlkugeln vermischt, in einer Form bei Drücken von 4 bis 40 MPa kalt verpresst und dann bei Temperaturen oberhalb des Erweichungsbereichs von PTFE, vorzugsweise zwischen 350 und 400°C versintert, wobei kompakte Platten mit glatter Oberfläche entstehen. Auch ein Versintern des Pulver/ Hohlkugel- Gemisches mit Laserstrahlen oder Mikrowellen ist möglich.

Die erfindungsgemäßen Platten weisen eine Dicke von 3 bis 15 mm, vorzugsweise von 4 bis 12 mm und insbesondere von 5 bis 10 mm auf.

Bei einer besonderen Ausführungsform erhalten die erfindungsgemäßen Platten eine - später zur Werkzeugoberfläche ausgerichtete - Riffelung, z.b. in Form von quadratischen Vertiefungen, die z.b. eine Tiefe von 1 mm und eine Fläche von 5 x 5 mm aufweisen. Im Anwendungszustand bilden sie zusammen mit der Werkzeugoberfläche geschlossene Zellen, wodurch eine weitere Verringerung der Wärmeleitzahl erreicht wird. Die Platten können zusätzlich noch mit einer ein- oder beidseitigen Wärmereflexionsschicht überzogen werden, z.b. mit Hochtemperaturlacken mit reflektierend wirkenden Füllstoffen, wie Silberpulver, Aluminiumflocken oder Glimmer. Auch eine PTFE- Dispersion mit Metallpartikeln kann aufgebracht werden. Durch Einbrennen des Lacks bzw. der Dispersion kann die Haltbarkeit gegen Abrieb verbessert werden. Ferner können reflektierende, dünne Metallfolien aufgeklebt sein.

Die Thermoisolierplatten sind flexibel, sie können z.b. gebogen und geknickt werden. Man kann sie gut bearbeiten, z.b. durch Wasserstrahlen, Bohren, Fräsen, Drehen und Schleifen. Sie sind stoß- und schlagfest, chemisch beständig, nässeresistent und leicht zu reinigen. Sie weisen eine geringe Dichte in der Größenordnung von 1 bis 1,5 g/cm³ auf und eine niedrige Wärmeleitzahl, gemessen nach DIN 52612, von vorzugsweise weniger als 0,25 W/mK, insbesondere von 0,05 bis 0,20 W/mK.

Die Thermoisolierplatten können z.b. Abmessungen von 1 x 1 m haben; sie können auf das Werkzeug aufgeschraubt, aufgeklemmt oder in Halterungen eingeschoben werden. Sie können z.b. zur Isolierung von Spritzgusswerkzeugen für die Herstellung von Formteilen aus thermoplastischen Kunststoffen, sowie zur Isolierung von Presswerkzeugen für die Herstellung von Gummi- und Silikonkautschuk- Teilen verwendet werden.

### Beispiel

In einem Partikelmischer wird PTFE- Pulver mit einer mittleren Korngröße von 30 µm mit Hohlglaskugeln mit einem Kugeldurchmesser von 50 µm, einer Druckfestigkeit von 20 MPa und einer Schüttdichte von 0,27 g/cm³ drei Stunden gemischt. Das Gewichtsverhältnis Hohlglaskugeln zu PTFE- Pulver beträgt 20 : 80. Das Compound wird nach dem Mischen mehrere Stunden lang ruhen gelassen, um eine Entlüftung zu gewährleisten.
Zum Pressen wird eine flexible Matrize aus einem Thermoplastmaterial mit eingefräster Negativstruktur in einen Stahlrahmen eingelegt, der sich in einer Einetagenpresse befindet. Nach dem Einfüllen des Gemischs wird ein Stempel aufgelegt. Durch Zusammenfahren der Presse und langsames Hochfahren des Drucks auf 15 MPa wird das Pulver entlüftet und zu einem sogenannten Grünling gepresst. Nach vorsichtigem Entformen der Platte wird diese in einem Hochtemperaturofen bei 370°C drei Stunden gesintert. Die Aufheiz- und Kühlrate beträgt 1 °C/min.
Es entsteht eine 8 mm dicke Platte im Format 1 x 2 m. Ihre Dichte beträgt 1,3 g/cm³, die Wärmeleitzahl 0,15 W/mK. Sie wird mit einem Silbersilikonlack beschichtet. Durch diese Reflexionsschicht wird der Verlust durch Strahlung weiter verringert.

## Patentansprüche

1. Thermoisolierplatte mit einer Dicke von 3 bis 15 mm auf Basis von Füllstoffe enthaltendem Polytetrafluorethylen (PTFE) zur Außenisolierung von Werkzeugen, **gekennzeichnet durch** einen Gehalt von 5 bis 70 Gew% Hohlkugeln mit einem mittleren Durchmesser von 0,01 bis 300 µm.

2. Thermoisolierplatte nach Anspruch 1, **dadurch gekennzeichnet, dass** die Hohlkugeln aus Glas, Keramik oder einem hochtemperaturbeständigen thermoplastischen Kunststoff bestehen.

3. Thermoisolierplatte nach Anspruch 1, **dadurch gekennzeichnet, dass** sie 10 bis weniger als 50 Gew% Hohlglaskugeln und 90 bis mehr als 50 Gew% PTFE enthält.

4. Thermoisolierplatte nach Anspruch 1, **dadurch gekennzeichnet, dass** die Hohlkugeln einen mittleren Durchmesser von 10 bis 150 µm aufweisen.

5. Thermoisolierplatte nach Anspruch 1, **dadurch gekennzeichnet, dass** sie eine Wärmeleitzahl von weniger als 0,25 W/mK aufweisen.

6. Thermoisolierplatte nach Anspruch 1, **dadurch gekennzeichnet, dass** sie eine geriffelte Oberfläche aufweisen.

7. Thermoisolierplatte nach Anspruch 1, **dadurch gekennzeichnet, dass** sie ein- oder beidseitig mit einer Wärmereflexionsschicht überzogen ist.

8. Thermoisolierplatte nach Anspruch 7, **dadurch gekennzeichnet, dass** die Wärmereflexionsschicht aus einem Hochtemperaturlack oder einer PTFE-Dispersion mit reflektierend wirkenden Füllstoffen besteht.

9. Verfahren zur Herstellung der Thermoisolierplatte nach Anspruch 1 durch vermischen von PTFE- Pulver mit den Hohlkugeln, kalt verpressen und versintern bei Temperaturen oberhalb des Erweichungsbereichs des PTFE.

10. Verfahren nach Anspruch 9, **dadurch gekennzeichnet, dass** bei Drücken von 4 bis 40 MPa verpresst wird.

11. Verfahren nach Anspruch 9, **dadurch gekennzeichnet, dass** bei Temperaturen von 350 bis 400 °C versintert wird.

## Claims

1. Thermal insulation sheet having a thickness of 3 to 15 mm based on polytetrafluoroethylene (PTFE) containing fillers for the external insulation of tools, **characterised by** a content of from 5 to 70 % by weight of hollow balls having an average diameter of from 0.01 to 300 µm.

2. Thermal insulation sheet according to claim 1, **characterised in that** the hollow balls are made of glass, ceramics or a high temperature-resistant thermoplastic material.

3. Thermal insulation sheet according to claim 1, **characterised in that** it contains from 10 to less than 50 % by weight of hollow glass balls and from 90 to more than 50 % by weight of PTFE.

4. Thermal insulation sheet according to claim 1, **characterised in that** the hollow balls have an average diameter of from 10 to 150 µm.

5. Thermal insulation sheet according to claim 1, **characterised in that** it has a thermal conductivity of less than 0.25 W/mK.

6. Thermal insulation sheet according to claim 1, **characterised in that** it has a corrugated surface.

7. Thermal insulation sheet according to claim 1, **characterised in that** one or both sides of the sheet is covered with a heat reflection layer.

8. Thermal insulation sheet according to claim 7, **characterised in that** the heat reflection layer consists of a high-temperature coating or a PTFE dispersion with reflecting fillers.

9. Process for the production of the thermal insulation sheet according to claim 1 by mixing PTFE powder with the hollow balls, cold pressing and sintering at temperatures above the softening range of PTFE.

10. Process according to claim 9, **characterised in that** pressing is carried out under pressures of from 4 to 40 MPa.

11. Process according to claim 9, **characterised in that** sintering is carried out at temperatures of from 350 to 400 °C.

## Revendications

1. Plaque thermoisolante ayant une épaisseur de 3 à 15 mm à base de polytétrafluoroéthylène (PTFE) contenant des charges aux fins d'isolation extérieure d'outils, **caractérisée en ce qu'**elle contient de 5 à 70 % en poids de billes creuses ayant un diamètre moyen de 0,01 à 300 µm.

2. Plaque thermoisolante selon la revendication 1, **caractérisée en ce que** les billes creuses sont composées de verre, de céramique ou d'une matière synthétique thermoplastique résistant aux hautes températures.

3. Plaque thermoisolante selon la revendication 1, **caractérisée en ce qu'**elle contient de 10 à moins de 50 % en poids de billes de verre creuses et de 90 à plus de 50 % en poids de PTFE.

4. Plaque thermoisolante selon la revendication 1, **caractérisée en ce que** les billes creuses présentent un diamètre moyen de 10 à 150 µm.

5. Plaque thermoisolante selon la revendication 1, **caractérisée en ce qu'**elle présente un indice de conductivité thermique de moins de 0,25 W/mK.

6. Plaque thermoisolante selon la revendication 1, **caractérisée en ce qu'**elle présente une surface rainurée.

7. Plaque thermoisolante selon la revendication 1, **caractérisée en ce qu'**elle est revêtue, sur un côté ou sur les deux côtés, d'une couche réfléchissant la chaleur.

8. Plaque thermoisolante selon la revendication 7, **caractérisée en ce que** la couche réfléchissant la chaleur se compose d'une laque haute température ou d'une dispersion de PTFE avec des charges à effet réfléchissant.

9. Procédé de fabrication de la plaque thermoisolante selon la revendication 1 par mélange de poudre de PTFE avec les billes creuses, pressage à froid et frittage à des températures supérieures à l'intervalle de ramollissement du PTFE.

10. Procédé selon la revendication 9, **caractérisé en ce qu'**on presse à des pressions de 4 à 40 MPa.

11. Procédé selon la revendication 9, **caractérisé en ce qu'**on fritte à des températures de 350 à 400°C.
